# EUROPÄISCHE PATENTSCHRIFT

(11) **EP 2 792 332 B1**
(45) Veröffentlichungstag und Bekanntmachung des Hinweises auf die Patenterteilung: **11.03.2015**
(21) Anmeldenummer: 13002056.3
(22) Anmeldetag: 18.04.2013
(51) Int. Cl.: A61C 13/00, A61C 13/20, B22F 3/00, B22F 3/10, C04B 35/64

(54) **Anordnung mit zumindest einem zu sinternden Werkstück**
Assembly comprising at least one workpiece to be sintered
Agencement comprenant au moins une pièce à fritter

(43) Veröffentlichungstag der Anmeldung: 22.10.2014
(73) Patentinhaber: Amann Girrbach AG, 6842 Koblach (AT)
(72) Erfinder: Reichert, Axel, 9443 Widnau (CH)
(74) Vertreter: Fechner, Thomas

(56) Entgegenhaltungen:
- DE-B3-102011 056 211
- DE-U1-202010 007 606
- JP-A- S58 141 305

## Beschreibung

Die Erfindung betrifft eine Anordnung mit zumindest einem zu sinternden, insbesondere dentalen, Werkstück und mit zumindest einem Stützmaterial und mit einer Sintervorrichtung zum Sintern des Werkstücks, wobei die Sintervorrichtung zumindest eine Gaszuführung für Schutzgas und zumindest eine Basisfläche aufweist, und das Werkstück auf der Basisfläche auf dem Stützmaterial aufliegt. Weiters betrifft die Erfindung auch ein Verfahren zum Sintern zumindest eines, insbesondere dentalen, Werkstücks in einer Sintervorrichtung.

Für die Sinterung von, insbesondere dentalen, Werkstücken sind beim Stand der Technik bereits verschiedenste Sintervorrichtungen und auch gattungsgemäße Anordnungen vorgeschlagen worden. In der gattungsfremden DE 20 2011 005 465 U1 wird z.B. vorgeschlagen, die zu sinternden Werkstücke in einer ringförmigen Sinterschale vollständig in einem Sintergranulat zu versenken, sodass das Sintergranulat die zu sinternden Werkstücke beim Sintervorgang vollständig umgibt und bedeckt. Die Praxis hat gezeigt, dass es bei dieser Anordnung zu einer Behinderung des beim Sintervorgangs auftretenden Schrumpfvorgangs des Werkstücks kommen kann, was zu einer ungewollten Verformung des Werkstücks führt. Gattungsgemäße Anordnungen sind z.B. in der WO 2011/020688 A1 offenbart. In dieser Schrift wird vorgeschlagen, eine Quarzschale im Betrieb der Sintervorrichtung mit innerten Kügelchen zu füllen, in die das Sintergut eingelegt wird. Das Schutzgas muss, um in die Quarzschale, also in die Umgebung des zu sinternden Werkstücks zu gelangen, die Quarzschale umströmen, um von oben in das Innere der Quarzschale zu gelangen. Es hat sich gezeigt, dass bei dieser Art der Anordnung während des Sintervorgangs eine relativ große Menge an Schutzgas verbraucht wird und es trotzdem zu Beeinträchtigungen des Sinterguts durch Reste von anderem Gas, insbesondere Sauerstoff, kommen kann.

In der DE 10 2011 056 211 wird vorgeschlagen, die Schale in der sich das Sintergut befindet, mittels eines Verschlusselements abzudecken, wobei die abgedeckte Schale von Schutzgas bzw. Innertgas durchströmbar ist. In dieser Schrift wird allerdings nicht im Detail dargelegt, wie diese Durchströmbarkeit der abgedeckten Schale ausgeführt sein soll.

Bei der gattungsfremden DE 10 2009 019 041 A1 geht es um eine Sintervorrichtung zum Sintern von Magnesium bzw. Magnesiumlegierungen bei relativ geringen Sintertemperaturen von 600° C bis 642° C unter einer Schutzgasatmosphäre. In Fig. 5 dieser Schrift wird vorgeschlagen, etwaige Verunreinigungen des Gases im Außentiegelbereich durch Gettermaterial hindurchzuleiten, bevor diese Verunreinigung in den Innentiegelbereich gelangen können.

Weitere Sintervorrichtungen sind in der DE 20 2010 007 606 U1 und der JP S58 141305 A gezeigt. In der japanischen Schrift wird vorgeschlagen, die zu sinternden Werkstücke vollständig in das Stützmaterial einzubetten bzw. darin zu versenken.

Umfangreiche Versuche mit verschiedensten Sintervorrichtungen haben gezeigt, dass auch geringe Änderungen im Aufbau gattungsgemäßer Anordnungen und Sintervorrichtungen, insbesondere bei sehr hohen Sintertemperaturen von z.T. über 1200 °C, oft einen unerwartet starken Einfluss auf die Qualität des Sinterergebnisses haben können. Insbesondere ist es mit beim Stand der Technik bekannten Anordnungen schwierig, sicherzustellen, dass keine unerwünschte Verfärbung oder Oxidation des zu sinternden Werkstücks auftritt.

Aufgabe der Erfindung ist es, eine gattungsgemäße Anordnung dahingehend weiter zu verbessern, dass unerwünschte negative Beeinflussungen des Sinterguts bei gleichzeitig relativ geringem Verbrauch an Schutzgas vermieden werden können.

Eine erfindungsgemäße Anordnung sieht hierzu vor, dass das Werkstück über das Stützmaterial zumindest teilweise übersteht und konstruktiv sichergestellt ist, dass das Schutzgas, vorzugsweise ausschließlich, durch das Stützmaterial (3) hindurch dem Werkstück zugeführt wird.

Eine Grundidee der Erfindung ist es somit, konstruktiv sicherzustellen, dass das Schutzgas, vorzugsweise ausschließlich, durch das Stützmaterial hindurch dem Werkstück zugeführt wird. Hierdurch wird der dem Werkstück zugeführte Gasstrom im Stützmaterial noch einmal in unmittelbarer Umgebung des zu sinternden Werkstücks einer Reinigung unterzogen, wodurch den Sintervorgang störende Fremdgase aus dem, dem Werkstück zugeführten Gasstrom herausgefiltert werden und somit in unmittelbarer Umgebung des Werkstücks während des Sintervorgangs eine sehr reine Schutzgasatmosphäre erreicht wird. Im Ergebnis dessen können unerwünschte Verfärbungen und sonstige Beeinträchtigungen des Werkstücks während des Sintervorgangs vermieden werden. Durch die Erfindung wird sichergestellt, dass der dem Werkstück zugeführte Gasstrom mittels des Stützmaterials unmittelbar vor dem Erreichen des Bereichs um das Werkstück gereinigt wird. Hierdurch kann bei einem relativ geringen Schutzgasverbrauch eine hohe Qualität der herzustellenden Werkstücke auch bei sehr hohen Sintertemperaturen von über 1200° C sichergestellt werden.

Als Schutzgas können die beim Stand der Technik bereits als solche verwendeten, insbesondere innerten, Gase zur Anwendung kommen. Das Schutzgas dient der Verdrängung der Luft und sonstigen Gase aus der Umgebung des Werkstücks und der Bereitstellung einer das Sintergut während des Sintervorgangs umgebenden und nicht mit dem Sintergut reagierenden Gashülle. Als Schutzgas können z.B. Argon und/oder Stickstoff verwendet werden.

Günstig ist es, wenn das Stützmaterial auf der Basisfläche aufliegt. Alternativ kann das Stützmaterial aber auch in die Basisfläche integriert sein. Da meistens die Verfärbungen und sonstigen Beeinträchtigungen des Werkstücks während des Sintervorgangs auf eine Oxidation zurückzuführen sind, sehen besonders bevorzugte Ausgestaltungsformen der Erfindung vor, dass das Stützmaterial ein Sauerstoff an sich bindendes Material ist. Unter den Begriff eines Materials fällt in diesem Zusammenhang auch eine Mischung verschiedener Materialien. In anderen Worten weist das Stützmaterial somit zumindest eine gewisse, vorzugsweise eine gute, Sauerstoffaffinität auf. Besonders bevorzugt ist vorgesehen, dass das Stützmaterial eine höhere Sauerstoffaffinität aufweist als das Werkstück. Unter Sauerstoffaffinität wird dabei das Bestreben eines Stoffes bzw. eines Materials verstanden, Sauerstoff, insbesondere durch chemische Reaktion, an sich zu binden. Je höher die Sauerstoffaffinität eines Stoffes bzw. Materials ist, desto eher und desto mehr Sauerstoff wird an diesen Stoff bzw. dieses Material gebunden. Mit Sauerstoff bzw. Restsauerstoff ist dabei der freie noch ungebundene Sauerstoff gemeint, durch welchen es zu einer ungewollten Oxidation des Werkstücks kommen kann. Dieser liegt, abgesehen von eventuell vorhandenen Sauerstoffradikalen, in der Luft in der Regel als Molekül mit zwei Sauerstoffatomen vor.

Besonders bevorzugte Ausgestaltungsformen der Erfindung sehen vor, dass das Stützmaterial körniges Schüttgut und/oder zumindest einen gasdurchlässigen Festkörper aufweist oder daraus besteht. Im Falle eines körnigen Schüttguts kann das Stützmaterial aus keramischen Stützkörnern, wie z.B. an sich bekannten keramischen Sinterperlen, z.B. aus mit Yttrium teilstabilisiertem Zirkoniumdioxid bestehen bzw. diese aufweisen. Die keramischen Stützkörner weisen in bevorzugten Ausgestaltungsformen einen Durchmesser zwischen 0,4mm und 2mm auf. Es hat sich gezeigt, dass bei erfindungsgemäßen Anordnungen beim Hindurchleiten des Schutzgases durch das Stützmaterial schon unter Verwendung eines solch gewöhnlichen Stützmaterials ein erheblicher Reinigungseffekt erzielt wird. Zusätzlich zu den keramischen Stützkörnern können aber auch noch Zusatzmaterialien z.B. zur Reduktion des Sauerstoffgehalts dem Stützmaterial beigemengt sein. Diese Materialien bzw. Materialmischungen können als Stützmaterial aber auch als ein gasdurchlässiger, vorzugsweise offenporiger, Festkörper ausgebildet sein. Auch Mischformen bei dem das Stützmaterial aus Schüttgut bzw. Schüttgutmischungen und aus zumindest einem solchen gasdurchlässigen Festkörper besteht, sind möglich.

Der Begriff eines dentalen Werkstücks umfasst all diejenigen künstlich angefertigten Komponenten, welche im Gebiss als Ersatz für natürliche Zähne oder Zahnbestandteile eingesetzt werden können, sowie Hilfskörper zum Befestigen oder zur Herstellung solcher Zahnersatzteile. Bei den zu sinternden Werkstücken handelt es sich besonders bevorzugt um solche aus Metall oder Metalllegierungen. Die Werkstücke können im Grünlings- oder Weißlingszustand gesintert werden. Die Werkstücke liegen in erfindungsgemäßen Anordnungen und damit auch während des Sintervorgangs auf dem Stützmaterial, bevorzugt direkt, auf. Sie stehen also zumindest teilweise, vorzugsweise größtenteils, über das Stützmaterial über, womit Probleme mit der während des Sintervorgangs auftretenden Schrumpfung vermieden sind.

Um sicherzustellen, dass das Schutzgas erfindungsgemäß, vorzugsweise ausschließlich, durch das Stützmaterial hindurch dem Werkstück zugeführt wird, gibt es verschiedene Möglichkeiten. Eine erste Gruppe von erfindungsgemäßen Varianten sieht dabei vor, dass die Anordnung einen Barrierekörper aufweist, welcher, zur vollständigen Umleitung des Schutzgases auf dem Weg zum Werkstück durch das Stützmaterial hindurch, im Strömungsweg des Schutzgases zwischen der Gaszuführung für das Schutzgas und dem Werkstück angeordnet ist. Bei diesen Varianten zwingt der Barrierekörper somit das Schutzgas durch das Stützmaterial hindurch, bevor es zum Werkstück gelangen kann. Um dies zu erreichen, kann ein Barrierekörper zusammen mit dem Stützmaterial einen Hohlraum umschließen, wobei das Werkstück in diesem Hohlraum angeordnet ist und das Schutzgas dem Hohlraum, vorzugsweise ausschließlich, durch das Stützmaterial hindurch zuführbar ist. Der Barrierekörper kann in Form eines Hohlkörpers ausgebildet sein, wobei der Hohlkörper abgesehen von einer von einem Rand des Hohlkörpers umgebenen Öffnung eine vollständig geschlossene Wandung aufweist und der Rand vollständig auf dem Stützmaterial aufliegt oder in dieses eingebettet ist. Alternativ kann es aber auch vorgesehen sein, dass der Barrierekörper in Form einer umlaufenden, in sich geschlossenen Wand ausgebildet ist, wobei die umlaufend in sich geschlossene Wand zumindest eine von einem Rand der Wand umschlossene Öffnung aufweist und der Rand vollständig auf dem Stützmaterial aufliegt oder in dieses eingebettet ist. Diese zuletzt genannten Varianten eines Barrierekörpers bieten sich vor allem dann an, wenn das Schutzgas eine höhere Dichte als die aus der Umgebung des Werkstücks zu verdrängende Luft und sonstigen Gase aufweist. In diesen Ausgestaltungsformen können der Barrierekörper und das Stützmaterial zusammen dann eine Art Wanne bilden, welche nach oben offen ist. Die Luft und die sonstigen Gase werden durch das Schutzgas mit seiner höheren Dichte aus dieser Wanne verdrängt, sodass sich um das zu sinternde Werkstück eine reine Schutzgasatmosphäre aus dem durch das Stützmaterial gereinigten Schutzgas ausbildet.

Damit das Schutzgas erfindungsgemäß, vorzugsweise ausschließlich, durch das Stützmaterial hindurch dem Werkstück zuführbar ist, kann in anderen Ausgestaltungsformen aber auch auf entsprechende Barrierekörper verzichtet werden. Insbesondere in diesen Varianten ist vorgesehen, dass das Schutzgas von der Gaszuführung kommend, vorzugsweise ausschließlich, durch einen Durchströmbereich in der Basisfläche hindurch dem Werkstück zuführbar ist, wobei das Stützmaterial den Durchströmbereich vollständig abdeckt oder im Durchströmbereich vollflächig angeordnet ist oder den Durchströmbereich vollflächig ausbildet.

Der Vollständigkeit halber wird darauf hingewiesen, dass diese zuletzt genannte Variante, wie man das Schutzgas, vorzugsweise ausschließlich, durch das Stützmaterial hindurch dem Werkstück zuführt, auch mit den oben genannten Barrierekörpervarianten kombiniert werden kann.

Der Durchströmbereich in der Basisfläche kann in Form zumindest einer Durchströmöffnung, vorzugsweise mehrerer Durchströmöffnungen, in der Basisfläche ausgebildet sein. Im Falle von mehreren Durchströmöffnungen kann sich hierdurch eine Art siebartige Konstruktion der Basisfläche ergeben. Es kann aber auch sein, dass der Durchströmbereich in der Basisfläche in Form zumindest eines offenporigen Bereichs in der Basisfläche ausgebildet ist. Die Durchströmöffnungen werden meist künstlich, z.B. mittels Bohren, Stanzen, Ätzen oder dergleichen geschaffen, während bei Basisflächen mit offenporigen Bereichen eine im Material an sich vorhandene, gut gasdurchlässige Porösität zum Hindurchführen des Schutzgases durch die Basisfläche genutzt wird. Natürlich können auch beide Varianten miteinander kombiniert werden, um den Durchströmbereich in der Basisfläche auszubilden.

Bei einer Basisfläche mit zumindest einem offenporigen Bereich kann es sich um hochtemperaturbeständige gasdurchlässige Formkörper metallischer oder keramischer Art handeln. Diese können inerte Eigenschaften aufweisen und/oder als scheibenförmige Trennschicht ausgebildet sein. Mögliche Materialien für solche Basisflächen sind ZrO2, Al2O3, SiC, SiN, HT-Legierungen, etc.

Besonders bevorzugte Ausgestaltungsformen der Erfindung sehen vor, dass die Basisfläche den Boden einer Sinterschale der Sintervorrichtung bildet, wobei das Werkstück in der Sinterschale angeordnet ist.

Erfindungsgemäße Anordnungen bzw. deren Sintervorrichtungen werden in der Regel in Sinteröfen verwendet. Eine Vielzahl dieser Sinteröfen weist zur Abführung der während des Sintervorgangs abgegebenen Gase eine Art Kamin auf, welcher einen gewissen Kamineffekt und damit eine Beunruhigung der Atmosphäre im Sinterofen bewirkt. Damit es durch diese Strömungen im Sinterofen nicht zu einer Beunruhigung oder Verwirbelung der sich um das Werkstück herum ausbildenden Schutzgasatmosphäre kommt, sehen bevorzugte Ausgestaltungsformen der erfindungsgemäßen Anordnung vor, dass der Sinterhohlraum der Sintervorrichtung nach oben hin von einer Abdeckung abgeschlossen ist. Die Abdeckung kann gasdicht sein, aber auch zumindest eine Durchströmöffnung, vorzugsweise mehrere Durchströmöffnungen und/oder zumindest einen offenporigen Bereich aufweisen. Offenporige Bereiche der Abdeckung können wie die offenporigen Bereiche der Basisfläche ausgebildet sein.

Die Bestandteile der Sintervorrichtung können bevorzugt aus Metall, Metalllegierungen oder auch Keramik bestehen.

Wie eingangs erwähnt, betrifft die Erfindung neben einer erfindungsgemäßen Anordnung auch ein erfindungsgemäßes Verfahren zum Sintern eines insbesondere dentalen Werkstücks. Diese erfindungsgemäßen Verfahren werden bevorzugt mit einer erfindungsgemäßen Anordnung durchgeführt, sodass soweit anwendbar, die obigen Ausführungen zur erfindungsgemäßen Ausgestaltungsform einer Anordnung auch für das nachfolgend geschilderte erfindungsgemäße Verfahren gelten. Beim erfindungsgemäßen Verfahren handelt es sich um ein solches zum Sintern zumindest eines, insbesondere dentalen, Werkstücks in einer Sintervorrichtung, insbesondere einer erfindungsgemäßen Anordnung, wobei diese Sintervorrichtung zumindest eine Gaszuführung für Schutzgas und zumindest eine Basisfläche aufweist, und das Werkstück auf der Basisfläche auf zumindest einem Stützmaterial aufliegend und über das Stützmaterial zumindest teilweise überstehend gesintert wird, wobei das Schutzgas, vorzugsweise ausschließlich, durch das Stützmaterial hindurch dem Werkstück zugeführt wird.

In den nachfolgend beschriebenen Figuren sind verschiedene erfindungsgemäße Anordnungen, mit denen auch erfindungsgemäße Verfahren durchgeführt werden können, dargestellt. Es zeigen:
Fig. 1 bis 6 sowie 8 und 9 verschiedene Ausgestaltungsformen erfindungsgemäßer Anordnungen;
Fig. 7 eine Darstellung zur Gasverteilerkappe gemäß der Fig. 1 bis 3 und 5 sowie 6 und
Fig. 10 und 11 verschiedene Varianten des Stützmaterials.

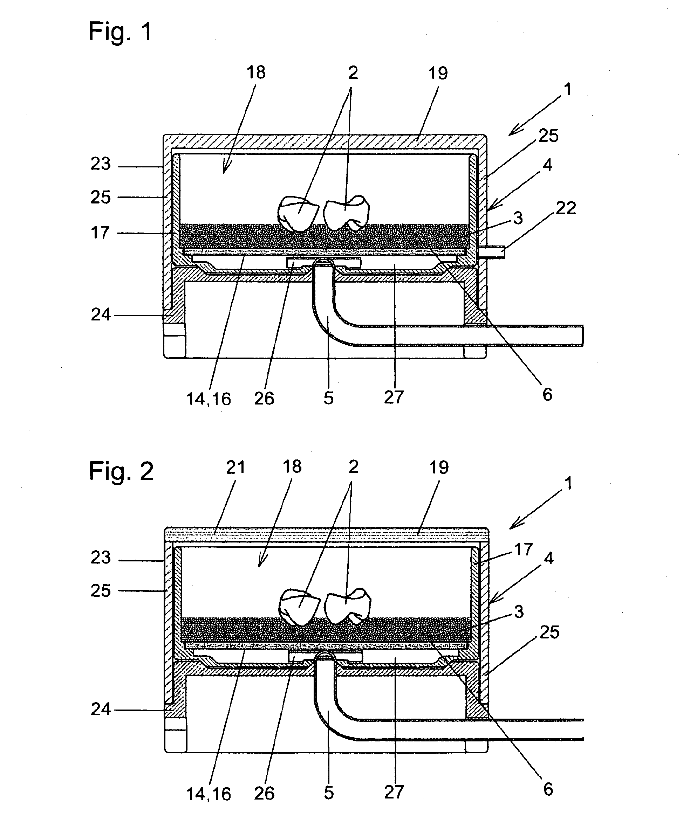

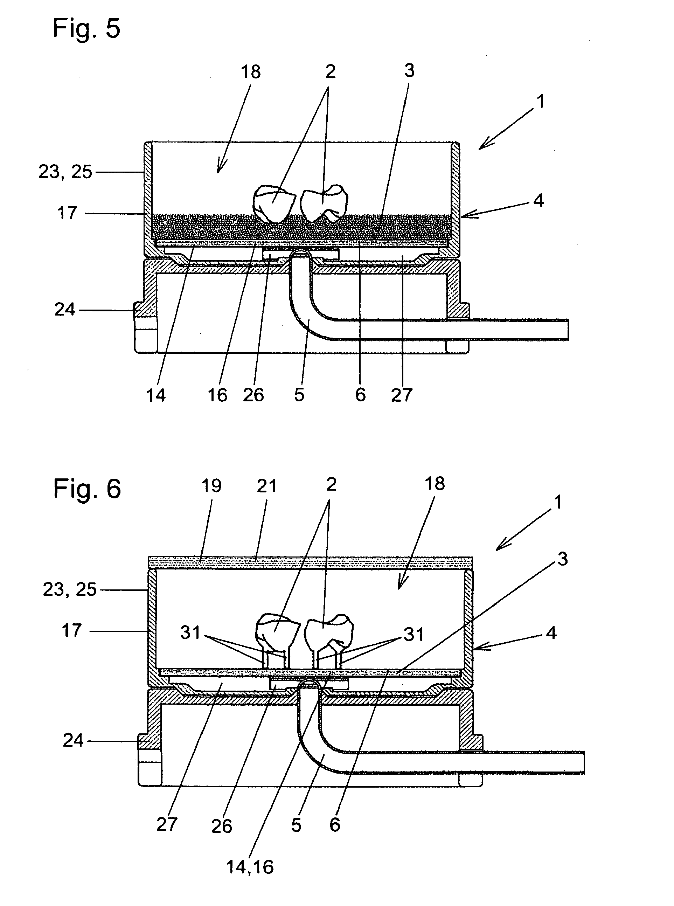

In den Fig. 1 bis 6 sowie 8 und 9 sind jeweils Anordnungen 1 mit zumindest einem zu sinternden dentalen Werkstück 2 und mit zumindest einem Stützmaterial 3 und mit einer Sintervorrichtung 4 zum Sintern des Werkstücks 2 gezeigt. Die Sintervorrichtungen 4 weisen jeweils zumindest eine Gaszuführung 5 für Schutzgas und zumindest eine Basisfläche 6 auf. Die Gaszuführung 5 ist günstigerweise, wie hier auch realisiert, als Gaszuführungsrohr ausgebildet. Man könnte in bevorzugten Varianten auch von einer Gaszuführleitung 5 sprechen. Die Basisfläche 6 ist diejenige Fläche, auf der das Werkstück während des Sintervorgangs ablegbar ist. Man könnte bei der Basisfläche 6 insofern auch von einer Bodenfläche sprechen. In allen genannten Figuren ist die Anordnung 1 während des Sintervorgangs gezeigt. In der jeweils dargestellten Betriebsstellung liegen die zu sinternden Werkstücke 2 auf dem Stützmaterial 3 auf und stehen über das Stützmaterial 3 zumindest teilweise, vorzugsweise größtenteils, über. In den Ausgestaltungsformen wird das Schutzgas von der Gaszuführung 5 kommend, ausschließlich durch das Stützmaterial 3 hindurch, dem Werkstück 2 zugeführt. In den Varianten gemäß Fig. 1 bis 5, sowie 8 und 9 liegt das Stützmaterial 3 auf der Basisfläche 6 auf. In der Variante gemäß Fig. 6 ist das Stützmaterial 3 wie weiter unten noch im Detail erläutert, in die Basisfläche 6 integriert. Bei dem Stützmaterial 3 handelt es sich günstigerweise um ein Sauerstoff an sich bindendes Material. Das Stützmaterial 3 kann als körniges Schüttgut und/oder als zumindest ein gasdurchlässiger Festkörper ausgebildet sein oder solche Ausgestaltungsformen aufweisen.

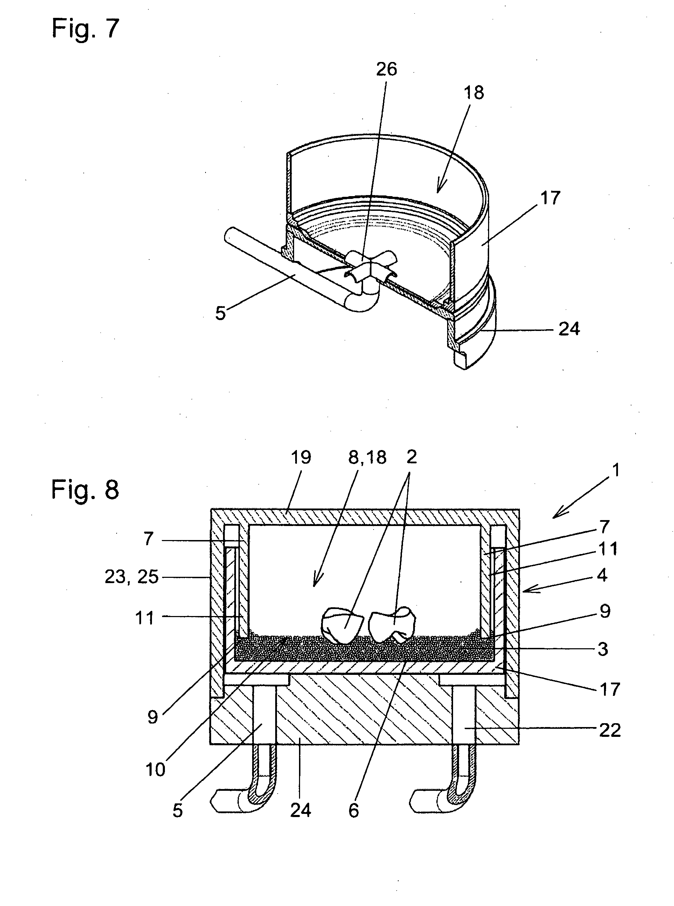

In den Varianten gemäß der Fig. 1 bis 6 ist vorgesehen, dass die Gaszuführung 5 auf der dem Sinterhohlraum 18 entgegengesetzten Seite der Basisfläche 6 angeordnet ist und die Basisfläche 6 zur Einleitung des von der Gaszuführung 5 kommenden Schutzgases in den Sinterhohlraum 18 zumindest einen für das Schutzgas durchlässigen Durchströmbereich 14 aufweist. In der dargestellten Betriebsstellung während des Sintervorgangs ist der Sinterhohlraum 18 nach unten hin von der Basisfläche 6 begrenzt und die Gaszuführung 5 ist unterhalb der Basisfläche 6 angeordnet. Die Gaszuführung 5 mündet in einen Gasverteilerhohlraum 27 der Sintervorrichtung 4, wobei der Gasverteilerhohlraum 27 auf der dem Sinterhohlraum 18 entgegengesetzten Seite der Basisfläche 5 angeordnet ist. In der dargestellten Betriebsstellung ist der Gasverteilerhohlraum 27 dieser Ausführungsbeispiele während des Sintervorgangs somit unterhalb der Basisfläche 6 angeordnet. Zur möglichst gleichmäßigen Verteilung des aus der Gaszuführung 5 ausströmenden Schutzgases im Gasverteilerhohlraum 27 kann eine Gasverteilerkappe 26 vorgesehen sein, wie sie in den Fig. 1 bis 3 sowie 5 und 6 gezeigt und in Fig. 7 besonders gut sichtbar dargestellt ist.

Durch diese Konstruktion wird erreicht, dass das Schutzgas ausschließlich durch das Stützmaterial 3 hindurch dem Werkstück 2 zuführbar ist, indem das Schutzgas von der Gaszuführung 5 kommend, ausschließlich durch den Durchströmbereich 14 in der Basisfläche 6 hindurch, dem Werkstück 2 zuführbar ist, wobei das Stützmaterial 3 vollständig abdeckt, wie dies in den Ausführungsvarianten gemäß der Fig. 1 bis 5 realisiert ist, oder den Durchströmbereich 14 vollflächig ausbildet, wie dies in Fig. 6 der Fall ist.

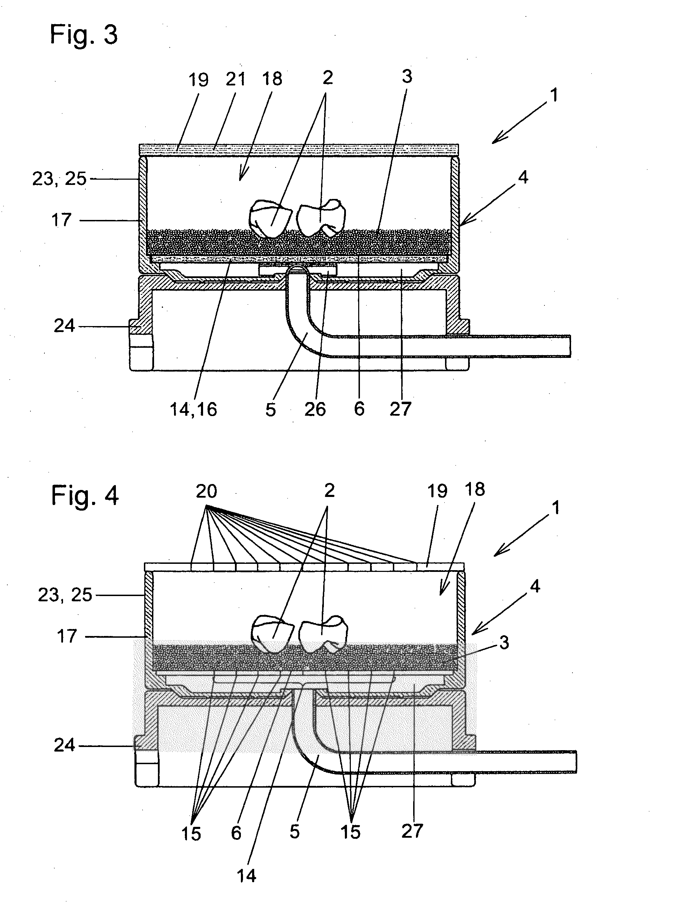

Der Durchströmbereich 14 in der Basisfläche 6, durch den das Schutzgas hindurch in den Sinterhohlraum 18 eintreten kann, kann in Form zumindest einer Durchströmöffnung 15, vorzugsweise mehrerer Durchströmöffnungen 15, in der Basisfläche 6 ausgebildet sein. Dies ist im Ausführungsbeispiel gemäß Fig. 4 so ausgeführt. Alternativ kann die Basisfläche 6 auch zumindest einen offenporigen Bereich 16 aufweisen oder insgesamt als ein solcher offenporiger Bereich 16 ausgebildet sein, wie dies in den Ausführungsvarianten gemäß der Fig. 1 bis 3 sowie 5 und 6 der Fall ist. In den Ausgestaltungsformen gemäß der Fig. 1 bis 6 sowie 8, bildet die Basisfläche 6 den Boden einer Sinterschale 17 der Sintervorrichtung 4 zur Aufnahme des zu sinternden Werkstücks 2 während des Sintervorgangs. Der Sinterhohlraum 18 liegt im Innenraum der Sinterschale 17. In den Varianten gemäß der Fig. 1 bis 5 deckt das Stützmaterial 3 den Durchströmbereich 14 in der Basisfläche 6 jeweils vollständig ab. In der Variante gemäß Fig. 6 ist das Stützmaterial 3 in die Basisfläche 6 integriert, sodass der Durchströmbereich 14 vollständig vom Stützmaterial 3 ausgebildet ist. Die Sinterschalen 17 der Ausführungsvarianten gemäß der Fig. 1 bis 6 sowie 8 sind jeweils auf einem Basisträger 24 der Sintervorrichtung 4 abgestützt.

In der Ausführungsvariante gemäß der Fig. 1 ist die Sinterschale 17 von einer haubenartigen Außenwand 23 umgeben, welche sich auf dem Basisträger 24 abstützt. Diese Außenwand 23 der Sintervorrichtung 4 weist sowohl die Seitenwand 25 als auch die Abdeckung 19 auf. Im Ausführungsbeispiel gemäß Fig. 1 ist die Abdeckung 19 gasdicht ausgebildet. Um Gas aus dem Sinterhohlraum 18 ablassen zu können, ist in diesem Ausführungsbeispiel gemäß Fig. 1 ein Gasablass 22 in der Außenwand 23 bzw. deren Seitenwand 25 vorgesehen. Durch diesen Gasablass 22 können sowohl die mittels Schutzgas aus dem Sinterhohlraum 18 verdrängte Luft als auch gegebenenfalls am Anfang des Sintervorgangs entstehende Abgase sowie auch überschüssiges Schutzgas ausströmen. Die Abdeckung 19 verhindert, dass außerhalb der Sintervorrichtung 4 im hier nicht dargestellten Sinterofen entstehende Strömungen die Schutzgasatmosphäre im Sinterhohlraum 18 stören können.

Beim Betrieb der erfindungsgemäßen Anordnung 1 bzw. Sintervorrichtung 4 gemäß Fig. 1 ist sichergestellt, dass das Schutzgas ausschließlich durch das Stützmaterial 3 hindurch dem Werkstück 2 zugeführt wird. Das Schutzgas tritt hierzu aus der Gaszuführung 5 aus und wird von der Gasverteilerkappe 26 im Gasverteilerhohlraum 27 verteilt. Es tritt dann durch den Durchströmbereich 14 der Basisfläche 6 hindurch und wird so dem Werkstück 2 zugeleitet bzw. in den Sinterhohlraum 18 eingeleitet, wobei es vollständig durch das Stützmaterial 3 hindurch geführt wird, was den eingangs erwähnten Reinigungsprozess des Schutzgases und insbesondere die Beseitigung bzw. zumindest weitere Reduzierung des Restsauerstoffgehalts bewirkt. Bevor der eigentliche Sinterprozess beginnt, wird der Sinterhohlraum 18 mit Schutzgas geflutet, so dass der vorher vorhandene Anteil an Luft, vorzugsweise vollständig, aus dem Sinterhohlraum 18 verdrängt ist. Der Sintervorgang beginnt günstigerweise erst nach Abschluss dieser Flutung des Sinterhohlraums 18 mit Schutzgas. Das Schutzgas weist, wie eingangs darauf hingewiesen, günstigerweise eine größere Dichte als die Luft auf.

Die Sintervorrichtung 4 bzw. Anordnung 1 des Ausführungsbeispiels gemäß Fig. 2 unterscheidet sich von der des Ausführungsbeispiels gemäß Fig. 1 nur durch den Aufbau der Außenwand 23. In der Variante gemäß Fig. 2 ist die Außenwand 23 zweiteilig aufgebaut. Sie weist eine zylindermantelförmige Seitenwand 25 auf, auf der eine separat ausgebildete Abdeckung 19 aufliegt. Die Abdeckung 19 ist in dieser Ausführungsvariante gemäß Fig. 2 als ein offenporiger Bereich 21 ausgebildet, sodass die aus dem Sinterhohlraum 18 austretenden Gase durch sie hindurchtreten können. Hierdurch kann der Gasablass 22 in der Seitenwand 25 entfallen. Trotz ihrer offenporigen Ausgestaltung sorgt die Abdeckung 19 in diesem Ausführungsbeispiel immer noch dafür, dass keine außerhalb der Sintervorrichtung 4 im Sinterofen entstehenden Verwirbelungen Einfluss auf die Schutzgasatmosphäre im Sinterhohlraum 18 nehmen können.

Der Vollständigkeit halber wird darauf hingewiesen, dass die offenporigen Bereiche 21 in der Abdeckung 19 wie auch die offenporigen Bereiche 16 in der Basisfläche 6 über die gesamte Abdeckung 19 bzw. Basisfläche 6 aber auch nur über Teilbereiche der jeweiligen Abdeckung 19 bzw. Basisfläche 6 ausgebildet sein können.

In Fig. 3 ist eine weiter abgewandelte Variante einer Sintervorrichtung 4 dargestellt, bei der auf eine separate Seitenwand 25 verzichtet wird. In dieser Variante bildet die Außenwand der Sinterschale 17 gleichzeitig die Außenwand 23 der Sintervorrichtung 4. Die hier ebenfalls offenporig ausgebildete Abdeckung 19 liegt direkt auf dem oberen Rand der Sinterschale 17 auf. Fig. 4 zeigt eine Abwandlungsform der Variante gemäß Fig. 3, bei der der Durchströmbereich 14 in der Basisfläche 6 nicht als offenporiger Bereich sondern als eine Anordnung mehrerer flächig verteilter Durchströmöffnungen 15 ausgebildet ist. In dieser Variante weist die Abdeckung 19 ebenfalls flächig verteilte Durchströmöffnungen 20 auf. Darüber hinaus wurde in dieser Variante auf die optionale Gasverteilerkappe 26 verzichtet. Der Vollständigkeit halber wird darauf hingewiesen, dass bei allen hier gezeigten Ausführungsvarianten, soweit anwendbar, die offenporigen Bereiche 16 durch die Durchströmöffnungen 15 in der jeweiligen Basisfläche 6 und die offenporigen Bereiche 21 durch die jeweiligen Durchströmöffnungen 20 in der Abdeckung 19 ersetzt werden können und umgekehrt. Es kann sich auch nur um eine einzige Durchströmöffnung 15 bzw. 20 handeln. Es kann auch in allen Ausgestaltungsformen die Gasverteilerkappe 26 vorhanden sein oder weggelassen werden.

Fig. 5 entspricht im Wesentlichen der Variante gemäß Fig. 3, wobei in Fig. 5 allerdings die Abdeckung 19 vollständig weggelassen wurde. Diese Variante bietet sich vor allem dann an, wenn keine außerhalb der Sintervorrichtung 1 auftretenden Verwirbelungen oder Strömungen die Schutzgasatmosphäre in dem Sinterhohlraum 18 stören können und das Schutzgas eine höhere Dichte als die zu verdrängende Luft aufweist.

Fig. 6 ist eine weitere Abwandlungsform der Variante gemäß Fig. 5, bei der das Stützmaterial 3 als gasdurchlässiger Festkörper ausgebildet und in die Basisfläche 6 integriert ist. Auch bei dieser Variante wird das Schutzgas ausschließlich durch das Stützmaterial 3 hindurch dem Werkstück 2 zugeführt. Die Werkstücke 2 stehen mit ihren Stützfüßen 31 bei dieser Ausgestaltungsform direkt auf der Basisfläche 6 auf. In dieser Variante bildet das Stützmaterial 3 vollflächig den Durchströmbereich 14 aus. Alternativ zum gasdurchlässigen Festkörper könnte das Stützmaterial 3 in dieser Variante auch in einem gitterkäfigartigen Körper angeordnet sein, dessen obere Gitterfläche dann die Basisfläche 6 bildet. In dieser Variante wäre das Stützmaterial 3 dann vollflächig im Durchströmbereich 14 angeordnet.

Fig. 7 ist eine teilweise geschnittene Darstellung, welche lediglich zur Veranschaulichung einer möglichen Ausgestaltungsform der Gasverteilerkappe 26 dient.

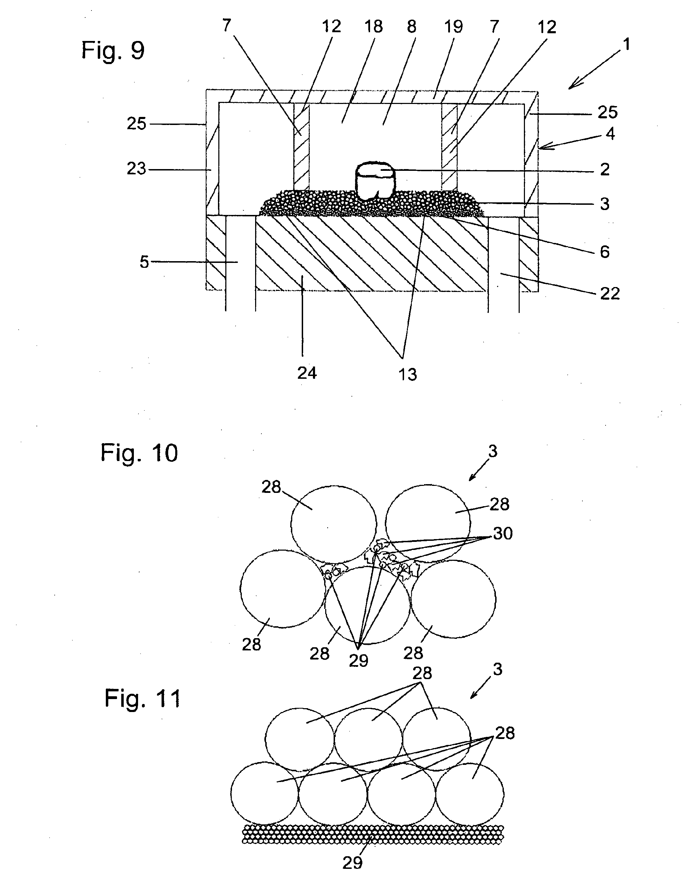

Während bei den bisher geschilderten Ausführungsbeispielen das Schutzgas von der Gaszuführung 5 kommend durch einen Durchströmbereich 14 in der Basisfläche 6 hindurch dem Werkstück 2 zugeführt wird, zeigen die Ausführungsvarianten gemäß Fig. 8 und 9 beispielhaft wie mittels verschieden ausgestalteten Barrierekörpern 7 das Schutzgas so umgeleitet werden kann, dass es ausschließlich durch das Stützmaterial 3 hindurch dem Werkstück 2 zuführbar ist. Der Barrierekörper 7 dient in beiden Fällen zur vollständigen Umleitung des Schutzgases auf dem Weg zum Werkstück 2 durch das Stützmaterial 3 hindurch und ist im Strömungsweg des Schutzgases zwischen der Gaszuführung 5 und dem Werkstück 2 angeordnet. In der ersten Ausgestaltungsform gemäß Fig. 8 ist der Barrierekörper 7 in Form eines Hohlkörpers ausgebildet, wobei dieser Hohlkörper abgesehen von seiner vom Rand 9 des Hohlkörpers umgebenden Öffnung 10 eine vollständig geschlossene Wand 11 aufweist und der Rand 9 vollständig auf dem Stützmaterial 3 aufliegt oder in dieses eingebettet ist. In dem Ausführungsbeispiel gemäß Fig. 8 ist die Deckfläche dieses Hohlkörpers in die Abdeckung 19 der Außenwand 23 der Sintervorrichtung 4 integriert. Dies muss aber nicht zwingend so sein, der Barrierekörper 7 kann nach oben hin auch von einem separaten, von der Abdeckung 19 losgelösten Deckel nach oben hin abgeschlossen sein. In der Ausführungsvariante gemäß Fig. 8 handelt es sich bei der Basisfläche 6 um den gasdicht ausgeführten Boden einer Sinterschale 17. Das durch die Gaszuführung 5 einströmende Schutzgas strömt zunächst zwischen der Seitenwand 25 der Außenwand 23 und der Sinterschale 17 nach oben und wird dann vom Barrierekörper 7 mit seiner Wand 11 in das Stützmaterial 3 umgeleitet, sodass der gesamte in den Sinterhohlraum 18 und damit den Werkstücken 2 zuströmende Gasstrom zwangsweise durch das Stützmaterial 3 hindurchgeführt werden muss. Im gezeigten Ausführungsbeispiel gemäß Fig. 8 umschließt der Barrierekörper 7 zusammen mit dem Stützmaterial 3 einen Hohlraum 8, wobei das Werkstück 2 in diesem Hohlraum 8 angeordnet ist und das Schutzgas dem Hohlraum 8 ausschließlich durch das Stützmaterial 3 hindurch zuführbar ist. Der Hohlraum 8 entspricht in diesem Ausführungsbeispiel dem Sinterhohlraum 18. Das aus dem Sinterhohlraum 18 verdrängte Gas bzw. Gasgemisch verlässt die Sintervorrichtung 4 über den Gasablass 22.

In Fig. 9 ist ein zweites Ausführungsbeispiel einer erfindungsgemäßen Anordnung 1 bzw. einer entsprechenden Sintervorrichtung 4 gezeigt, bei dem ein Barrierekörper 7 dazu verwendet wird, den gesamten Gaszustrom vollständig durch das Stützmaterial 3 zu leiten, bevor das Gas in den Sinterhohlraum 18 und damit in die Umgebung des Werkstücks 2 eintreten kann. In dem Ausführungsbeispiel gemäß Fig. 9 handelt es sich bei dem Barrierekörper um eine umlaufende, in sich geschlossene Wand 12, welche eine von einem Rand 13 der Wand 12 umschlossene Öffnung aufweist, wobei der Rand 13 wiederum vollständig auf dem Stützmaterial 3 aufliegt oder in dieses eingebettet ist. Im gezeigten Ausführungsbeispiel liegt der obere, vom Stützmaterial 3 abgewandte Rand des Barrierekörpers 7 an der Abdeckung 19 der Außenwand 23 an, sodass der Sinterhohlraum 18 im Sinne einer möglichst guten Strömungsberuhigung auch nach oben hin abgeschlossen ist. Es sind auch Varianten denkbar, bei denen der obere Rand des Barrierekörpers 7 nicht bis zur Abdeckung 19 reicht. Diese Varianten sind einsetzbar, wenn das verwendete Schutzgas wiederum eine größere Dichte als die aus dem Sinterhohlraum 18 zu verdrängenden Gase aufweist und eine Strömungsberuhigung durch Abdeckung des Sinterhohlraums 18 nicht unbedingt notwendig ist.

Ein weiterer Unterschied zu den bisher gezeigten Ausgestaltungsformen ist bei Fig. 9, dass hier die Basisfläche 6, auf der das Werkstück 2 unter Zwischenschaltung des Stützmaterials 3 aufliegt, nicht Teil einer Sinterschale 17 ist. Das Ausführungsbeispiel gemäß Fig. 9 zeigt beispielhaft, dass nicht unbedingt eine Sinterschale 17 vorhanden sein muss. In der Variante gemäß Fig. 9 wird die Basisfläche 6 direkt vom Basisträger 24 gebildet, was auch in anderen Ausführungsbeispielen so sein kann.

Auch wenn bei allen hier gezeigten Ausführungsbeispielen das Schutzgas ausschließlich durch das Stützmaterial 3 hindurch dem Werkstück 2 zuführbar ist, so muss dies nicht zwingend immer so sein. Es können eventuell auch Wegsamkeiten für das Schutzgas hin zum Werkstück 2 geduldet werden, bei denen nicht das gesamte Schutzgas, vorzugsweise aber zumindest ein Großteil des Schutzgases, durch das Stützmaterial 3 geführt wird. Dies kann z.B. bei den Ausführungsvarianten gemäß der Fig. 1 bis 5 dann erreicht werden, wenn nicht der gesamte Durchströmbereich 14 mit Stützmaterial abgedeckt ist. In den Varianten gemäß der Fig. 8 und 9 wäre dies z.B. dann der Fall, wenn die Wände 11 bzw. 12 nicht überall ganz bis zum bzw. ins Stützmaterial 3 reichen. Bevorzugt ist aber vorgesehen, dass das gesamte Schutzgas ausschließlich durch das Stützmaterial 3 geführt wird, bevor es zum Werkstück 2 gelangt.

Wie eingangs bereits erläutert, kann es sich beim Stützmaterial 3 z.B. um ein Granulat, ein Pulver oder eine Granulat-Pulver-Mischung handeln. Das Stützmaterial 3 kann aber auch in Form eines gasdurchlässigen Festkörpers ausgebildet sein oder einen solchen aufweisen. Auch Mischformen davon sind möglich. Es kann sich beim Stützmaterial 3 z.B. um übliche, im Handel erhältliche sogenannte Sinterperlen z.B. aus mit Yttrium teilstabilisiertem Zirkoniumdioxid handeln. Es hat sich gezeigt, dass auch ein solches Stützmaterial 3 bereits eine gewisse Reinigungsfunktion und vor allem eine sauerstoffbindende Funktion aufweist. Auch andere keramische Stützkörner oder Mischungen daraus können als Stützmaterial 3 zum Einsatz kommen. Um die Reinigungsfunktion und insbesondere die Bindung von Restsauerstoff zu verbessern, kann diesen keramischen Stützkörnern 28 aber auch ein Zusatzmaterial 29 beigemengt sein, welches insbesondere eine höhere Sauerstoffaffinität als die keramischen Stützkörper 28 selbst aufweisen kann. Die höhere Sauerstoffaffinität des Zusatzmaterials 29 kann z.B. erreicht werden, indem als Zusatzmaterial ein Material oder eine Materialmischung verwendet wird, welche zumindest ein chemisches Element oder zumindest eine chemische Verbindung aufweist, welche eine höhere Sauerstoffaffinität als das Material des Werkstücks 2 bzw. als das Material der keramischen Stützkörner 28 aufweist. Insbesondere kann das Zusatzmaterial 29 dazu dienen, den Restsauerstoff chemisch an sich zu binden. Handelt es sich bei dem Zusatzmaterial 29 um Komponenten, die beim Sintervorgang am Werkstück 2 anhaften könnten, so ist es günstig, wenn zwischen dem Zusatzmaterial 29 und dem Werkstück 2 eine Zwischenschicht aus keramischen Stützkörnern 28 vorliegt. Die verschiedenen Komponenten des Stützmaterials 3 können somit als eine homogene aber auch als eine homogene Mischung vorliegen. Zusatzmaterialien 29 mit hoher Sauerstoffaffinität können z.B. Metalle oder Metalllegierungen sein. Es kommen aber auch keramische Zusatzmaterialien in Frage. Das Zusatzmaterial 29 kann ebenfalls in Pellets- oder Pulverform vorliegen. Beim Zusatzmaterial kann es sich z.B. um Kobald, Chrom, Molybdän, Titan oder Titanlegierungen handeln. Das Stützmaterial 3 kann somit z.B. ein Schüttgut bestehend aus zwei Komponenten wie z.B. dem keramischen Stützkorn 28 und dem Zusatzmaterial 29 sein. Es sind aber auch Mehrkomponentenmischungen denkbar. Z.B. kann in Form einer Trägersubstanz 30 eine dritte Komponente im Stützmaterial 3 vorhanden sein. Diese Trägersubstanz 30 kann dazu dienen, dass sich das Zusatzmaterial 29 an ihr anlagert. Es kann sich z.B. um keramische Materialien wie Aluminiumkorund handeln. Die Trägersubstanz 30 weist günstigerweise eine raue und/oder abrasive Oberfläche auf. Günstigerweise ist der Korndurchmesser der keramischen Stützkörner 28 größer als der Korndurchmesser der Trägersubstanz 30. Der Korndurchmesser der Zusatzmaterialien 29 ist dann günstigerweise wiederum kleiner als der der Trägersubstanz 30. Auch beim Fehlen der Trägersubstanz ist der Korndurchmesser der Stützkörner günstigerweise größer als der des Zusatzmaterials. Fig. 10 zeigt ein Stützmaterial 3 in Form einer solchen Dreikomponentenmischung.

Durch die geringeren Korndurchmesser kann die Trägersubstanz 30 samt des daran angelagerten Zusatzmaterials 29 zwischen den keramischen Stützkörpern 28 hindurch gleiten und sich zumindest im Wesentlichen im unteren Bereich des Stützmaterials 30 ablagern. Hierdurch wird, wie oben bereits erwähnt, eine Ausgestaltungsform erreicht, bei der zumindest ein Teil der keramischen Stützkörper 28 zwischen dem Werkstück 2 und den restlichen Bestandteilen des Stützmaterials 3 angeordnet ist. Fig. 11 zeigt eine weitere Variante des Stützmaterials 3. Hier handelt es sich um eine Mischung aus körnigem Schüttgut in Form der keramischen Stützkörner 28 und einem darunter angeordneten gasdurchlässigen Festkörper bestehend aus dem Zusatzmaterial 29, welches in diesem Ausführungsbeispiel wiederum durch die oben genannten Maßnahmen eine höheren Sauerstoffaffinität als die keramischen Stützkörner 28 aufweisen kann. Der Vollständigkeit halber sei darauf hingewiesen, dass auch ausschließlich gasdurchlässige Festkörper als Stützmaterial 3 verwendet werden können.

**Legende**

| zu den Hinweisziffern: | | | |
|---|---|---|---|
| 1 | Anordnung | 28 | keramisches Stützkorn |
| 2 | Werkstück | 29 | Zusatzmaterial |
| 3 | Stützmaterial | 30 | Trägersubstanz |
| 4 | Sintervorrichtung | 31 | Stützfuß |
| 5 | Gaszuführung | | |
| 6 | Basisfläche | | |
| 7 | Barrierekörper | | |
| 8 | Hohlraum | | |
| 9 | Rand | | |
| 10 | Öffnung | | |
| 11 | Wand | | |
| 12 | Wand | | |
| 13 | Rand | | |
| 14 | Durchströmbereich | | |
| 15 | Durchströmöffnung | | |
| 16 | offenporiger Bereich | | |
| 17 | Sinterschale | | |
| 18 | Sinterhohlraum | | |
| 19 | Abdeckung | | |
| 20 | Durchströmöffnung | | |
| 21 | offenporiger Bereich | | |
| 22 | Gasablass | | |
| 23 | Außenwand | | |
| 24 | Basisträger | | |
| 25 | Seitenwand | | |
| 26 | Gasverteilerkappe | | |
| 27 | Gasverteilerhohlraum | | |

## Patentansprüche

1. Anordnung (1) mit zumindest einem zu sinternden, insbesondere dentalen, Werkstück (2) und mit zumindest einem Stützmaterial (3) und mit einer Sintervorrichtung (4) zum Sintern des Werkstücks (2), wobei die Sintervorrichtung (4) zumindest eine Gaszuführung (5) für Schutzgas und zumindest eine Basisfläche (6) aufweist, und das Werkstück (2) auf der Basisfläche (6) auf dem Stützmaterial (3) aufliegt, **dadurch gekennzeichnet, dass** das Werkstück (2) über das Stützmaterial (3) zumindest teilweise übersteht und konstruktiv sichergestellt ist, dass das Schutzgas, vorzugsweise ausschließlich, durch das Stützmaterial (3) hindurch dem Werkstück (2) zugeführt wird.

2. Anordnung (1) nach Anspruch 1, **dadurch gekennzeichnet, dass** das Stützmaterial (3) auf der Basisfläche (6) aufliegt oder in diese integriert ist.

3. Anordnung (1) nach Anspruch 1 oder 2, **dadurch gekennzeichnet, dass** das Stützmaterial (3) ein Sauerstoff an sich bindendes Material ist.

4. Anordnung (1) nach einem der Ansprüche 1 bis 3, **dadurch gekennzeichnet, dass** das Stützmaterial (3) eine höhere Sauerstoffaffinität aufweist als das Werkstück (2).

5. Anordnung (1) nach einem der Ansprüche 1 bis 4, **dadurch gekennzeichnet, dass** das Stützmaterial (3) körniges Schüttgut und/oder zumindest einen gasdurchlässigen Festkörper aufweist oder daraus besteht.

6. Anordnung (1) nach einem der Ansprüche 1 bis 5, **dadurch gekennzeichnet, dass** die Anordnung (1) einen Barrierekörper (7) aufweist, welcher, zur vollständigen Umleitung des Schutzgases auf dem Weg zum Werkstück (2) durch das Stützmaterial hindurch, im Strömungsweg des Schutzgases zwischen der Gaszuführung (5) für das Schutzgas und dem Werkstück (2) angeordnet ist.

7. Anordnung (1) nach einem der Ansprüche 1 bis 6, **dadurch gekennzeichnet, dass** die Anordnung (1) einen Barrierekörper (7) aufweist, welcher zusammen mit dem Stützmaterial (3) einen Hohlraum (8) umschließt, wobei das Werkstück (2) in diesem Hohlraum (8) angeordnet ist und das Schutzgas dem Hohlraum (8), vorzugsweise ausschließlich, durch das Stützmaterial (3) hindurch zuführbar ist.

8. Anordnung (1) nach Anspruch 6 oder 7, **dadurch gekennzeichnet, dass** der Barrierekörper (7) in Form eines Hohlkörpers ausgebildet ist, wobei der Hohlkörper abgesehen von einer von einem Rand (9) des Hohlkörpers umgebenen Öffnung (10) eine vollständig geschlossene Wand (11) aufweist und der Rand (9) vollständig auf dem Stützmaterial (3) aufliegt oder in dieses eingebettet ist.

9. Anordnung (1) nach Anspruch 6 oder 7, **dadurch gekennzeichnet, dass** der Barrierekörper (7) in Form einer umlaufenden, in sich geschlossenen Wand (12) ausgebildet ist, wobei die umlaufend in sich geschlossene Wand (12) zumindest eine, von einem Rand (13) der Wand (12) umschlossene Öffnung (10) aufweist und der Rand (13) vollständig auf dem Stützmaterial (3) aufliegt oder in dieses eingebettet ist.

10. Anordnung (1) nach einem der Ansprüche 1 bis 9, **dadurch gekennzeichnet, dass** das Schutzgas von der Gaszuführung (5) kommend, vorzugsweise ausschließlich, durch einen Durchströmbereich (14) in der Basisfläche (6) hindurch dem Werkstück (2) zuführbar ist, wobei das Stützmaterial (3) den Durchströmbereich (14) vollständig abdeckt oder im Durchströmbereich (14) vollflächig angeordnet ist oder den Durchströmbereich (14) vollflächig ausbildet.

11. Anordnung (1) nach Anspruch 10, **dadurch gekennzeichnet, dass** der Durchströmbereich (14) in der Basisfläche (6) in Form zumindest einer Durchströmöffnung (15), vorzugsweise mehrerer Durchströmöffnungen (15) in der Basisfläche (6), und/oder zumindest eines offenporigen Bereichs (18) in der Basisfläche (6) ausgebildet ist.

12. Anordnung (1) nach einem der Ansprüche 1 bis 11, **dadurch gekennzeichnet, dass** die Basisfläche (6) den Boden einer Sinterschale (17) der Sintervorrichtung bildet, wobei das Werkstück (2) in der Sinterschale (17) angeordnet ist.

13. Anordnung (1) nach einem der Ansprüche 1 bis 12, **dadurch gekennzeichnet, dass** die Sintervorrichtung (4) einen Sinterhohlraum (18) aufweist, in dem das Werkstück (2) angeordnet ist, wobei der Sinterhohlraum (18) nach oben hin von einer Abdeckung (19) abgeschlossen ist.

14. Anordnung (1) nach Anspruch 13, **dadurch gekennzeichnet, dass** die Abdeckung (19) gasdicht ist oder zumindest eine Durchströmöffnung (15), vorzugsweise mehrerer Durchströmöffnungen (20), und/oder zumindest einen offenporigen Bereich (21) aufweist.

15. Verfahren zum Sintern zumindest eines, insbesondere dentalen, Werkstücks (2) in einer Sintervorrichtung (4), insbesondere mit einer Anordnung (1) nach einem der Ansprüche 1 bis 14, wobei die Sintervorrichtung (4) zumindest eine Gaszuführung (5) für Schutzgas und zumindest eine Basisfläche (6) aufweist, und das Werkstück (2) auf der Basisfläche (6) auf zumindest einem Stützmaterial (3) aufliegend gesintert wird, **dadurch gekennzeichnet, dass** das Werkstück (2) über das Stützmaterial (3) zumindest teilweise überstehend gesintert wird und das Schutzgas, vorzugsweise ausschließlich, durch das Stützmaterial (3) hindurch dem Werkstück (2) zugeführt wird.

## Claims

1. An arrangement (1) having at least one, in particular dental, workpiece (2) to be sintered and having at least one support material (3) and having a sintering device (4) for sintering the workpiece (2), wherein the sintering device (4) has at least one gas feed (5) for protective gas and at least one base surface (6), and the workpiece (2) rests, on the support material (3), on the base surface (6), **characterized in that** the workpiece (2) protrudes at least partially above the support material (3) and design ensures that the protective gas is fed, preferably exclusively, through the support material (3) to the workpiece (2).

2. An arrangement (1) according to claim 1, **characterized in that** the support material (3) rests on the base surface (6) or is integrated therein.

3. An arrangement (1) according to claim 1 or 2, **characterized in that** the support material (3) is a material binding oxygen to itself.

4. An arrangement (1) according to any one of claims 1 to 3, **characterized in that** the support material (3) has a higher oxygen affinity than the workpiece (2).

5. An arrangement (1) according to any one of claims 1 to 4, **characterized in that** the support material (3) has or consists of granular bulk material and/or at least one gas-permeable solid.

6. An arrangement (1) according to any one of claims 1 to 5, **characterized in that** the arrangement (1) has a barrier body (7) which, for complete diversion of the protective gas on the way to the workpiece (2) through the support material, is arranged in the flow path of the protective gas so as to be between the gas feed (5) for the protective gas and the workpiece (2).

7. An arrangement (1) according to any one of claims 1 to 6, **characterized in that** the arrangement (1) has a barrier body (7) which together with the support material (3) encloses a hollow space (8), wherein the workpiece (2) is arranged in this hollow space (8) and the protective gas can be fed to the hollow space (8) through the support material (3), preferably exclusively.

8. An arrangement (1) according to claim 6 or 7, **characterized in that** the barrier body (7) is in the form of a hollow body, wherein the hollow body has a completely closed wall (11), apart from an opening (10) surrounded by an edge (9) of the hollow body, and the edge (9) rests completely on the support material (3) or is embedded therein.

9. An arrangement (1) according to claim 6 or 7, **characterized in that** the barrier body (7) is in the form of an encircling wall (12) closed in itself, wherein the encircling wall (12) closed in itself has at least one opening (10) enclosed by an edge (23) of the wall (12) and the edge (13) rests completely on the support material (3) or is embedded therein.

10. An arrangement (1) according to any one of claims 1 to 9, **characterized in that** coming from the gas feed (5), the protective gas can be fed, preferably exclusively, through a through-flow region (14) in the base surface (6) to the workpiece (2), wherein the support material (3) completely covers the through-flow region (14) or is arranged over its entire surface in the through-flow region (14) or forms the through-flow region (14) over its entire surface.

11. An arrangement (1) according to claim 10, **characterized in that** the through-flow region (14) in the base surface (6) is in the form of at least one through-flow opening (15), preferably a plurality of through-flow openings (15) in the base surface (6), and/or at least one open-pored region (18) in the base surface (6).

12. An arrangement (1) according to any one of claims 1 to 11, **characterized in that** the base surface (6) forms the base of a sintering dish (17) of the sintering device, wherein the workpiece (2) is arranged in the sintering dish (17).

13. An arrangement (1) according to any one of claims 1 to 12, **characterized in that** the sintering device (4) has a sintering cavity (18) in which the workpiece (2) is arranged, wherein the sintering cavity (18) is closed at the top by a cover (19).

14. An arrangement (1) according to claim 13, **characterized in that** the cover (19) is gas-tight or has at least one through-flow opening (15), preferably a plurality of through-flow openings (20), and/or at least one open-pored region (21).

15. A method of sintering at least one, in particular dental, workpiece (2) in a sintering device (4), in particular with an arrangement {1} according to any one of claims 1 to 14, wherein the sintering device (4) has at least one gas feed (5) for protective gas and at least one base surface (6) and the workpiece (2) is sintered on the base surface (6), resting on at least one support material (3), **characterized in that** the workpiece (2) is sintered protruding at least partially above the support material (3) and the protective gas is fed, preferably exclusively, through the support material (3) to the workpiece (2).

## Revendications

1. Ensemble (1) comprenant au moins une pièce à usiner (2) à fritter, en particulier une pièce à usiner dentaire, et comprenant au moins un matériau de support (3) et un dispositif de frittage (4) servant à fritter la pièce à usiner (2), le dispositif de frittage (4) présentant au moins une arrivée de gaz (5) destinée au gaz protecteur et au moins une surface de base (6) et la pièce à usiner (2) reposant sur la surface de base (6) sur le matériau de support (3), **caractérisé en ce que** la pièce à usiner (2) dépasse au moins en partie du matériau de support (3) et garantit en termes de structure que le gaz protecteur est amené, de préférence exclusivement, en passant par le matériau de support (3), à la pièce à usiner (2).

2. Ensemble (1) selon la revendication 1, **caractérisé en ce que** le matériau de support (3) repose sur la surface de base (6) ou est intégré dans cette dernière.

3. Ensemble (1) selon la revendication 1 ou 2, **caractérisé en ce que** le matériau de support (3) est un matériau se liant à l'oxygène.

4. Ensemble (1) selon l'une quelconque des revendications 1 à 3, **caractérisé en ce que** le matériau de support (3) présente une affinité à l'oxygène plus importante que la pièce à usiner (2).

5. Ensemble (1) selon l'une quelconque des revendications 1 à 4, **caractérisé en ce que** le matériau de support (3) présente un produit en vrac granulaire et/ou au moins un corps solide perméable au gaz ou en est constitué.

6. Ensemble (1) selon l'une quelconque des revendications 1 à 5, **caractérisé en ce que** l'ensemble (1) présente un corps formant barrière (7), lequel est disposé, afin de dévier en totalité le gaz protecteur sur le chemin menant à la pièce à usiner (2) en passant par le matériau de support, dans le trajet d'écoulement du gaz protecteur entre l'arrivée de gaz (5) destinée au gaz protecteur et sur le chemin menant à la pièce à usiner (2).

7. Ensemble (1) selon l'une quelconque des revendications 1 à 6, **caractérisé en ce que** l'ensemble (1) présente un corps formant barrière (7), lequel renferme conjointement avec le matériau de support (3) un espace creux (8), la pièce à usiner (2) étant disposée dans ledit espace creux (8) et le gaz protecteur pouvant être amené à l'espace creux (8), de préférence exclusivement, en passant par le matériau de support (3).

8. Ensemble (1) selon la revendication 6 ou 7, **caractérisé en ce que** le corps formant barrière (7) est réalisé sous la forme d'un corps creux, le corps creux présentant, abstraction faite d'une ouverture (10) entourée par un bord (9) du corps creux, une paroi (11) entièrement fermée et le bord (9) reposant en totalité sur le matériau de support (3) ou étant intégré dans ce dernier.

9. Ensemble (1) selon la revendication 6 ou 7, **caractérisé en ce que** le corps formant barrière (7) est réalisé sous la forme d'une paroi (12) périphérique fermée sur elle, la paroi (12) périphérique, fermée sur elle présentant au moins une ouverture (10) entourée par un bord (13) de la paroi (12) et le bord (13) reposant en totalité sur le matériau de support (3) ou étant intégré dans ce dernier.

10. Ensemble (1) selon l'une quelconque des revendications 1 à 9, **caractérisé en ce que** le gaz protecteur peut être amené en provenance de l'arrivée de gaz z (5), de préférence uniquement, en passant par une zone de passage d'écoulement (14), dans la surface de base (6), à la pièce à usiner (2), le matériau de support (3) recouvrant en totalité la zone de passage d'écoulement (14) ou étant disposé en totalité dans la zone de passage d'écoulement (14) ou réalisant sur toute la surface la zone de passage d'écoulement (14).

11. Ensemble (1) selon la revendication 10, **caractérisé en ce que** la zone de passage d'écoulement (14) est réalisée dans la surface de base (6) sous la forme d'au moins une ouverture de passage d'écoulement (15), de préférence de plusieurs ouvertures de passage d'écoulement (15) dans la surface de base (6), et/ou au moins sous la forme d'une zone à pores ouverts (18) dans la surface de base (6).

12. Ensemble (1) selon l'une quelconque des revendications 1 à 11, **caractérisé en ce que** la surface de base (6) forme le fond d'une nacelle de frittage (17) du dispositif de frittage, la pièce à usiner (2) étant disposée dans la nacelle de frittage (17).

13. Ensemble (1) selon l'une quelconque des revendications 1 à 12, **caractérisé en ce que** le dispositif de frittage (4) présente un espace creux de frittage (18), dans lequel est disposée la pièce à usiner (2), l'espace creux de frittage (18) étant fermé par un système de recouvrement (19) vers le haut.

14. Ensemble (1) selon la revendication 13, **caractérisé en ce que** le système de recouvrement (19) est étanche aux gaz ou présente au moins une ouverture de passage d'écoulement (15), de préférence plusieurs ouvertures de passage d'écoulement (20) et/ou au moins une zone à pores ouverts (21).

15. Procédé servant à fritter au moins une pièce à usiner (2), en particulier une pièce à usiner dentaire, dans un dispositif de frittage (4), en particulier avec un ensemble (1) selon l'une quelconque des revendications 1 à 14, le dispositif de frittage (4) présentant au moins une arrivée de gaz (5) destinée au gaz protecteur et au moins une surface de base (6) et la pièce à usiner (2) reposant sur la surface de base (6) sur au moins un matériau de support (3) étant frittée, **caractérisé en ce que** la pièce à usiner (2) dépassant au moins en partie du matériau de support (3) est frittée, et **en ce que** le gaz protecteur est amené de préférence exclusivement en passant par le matériau de support (3) à la pièce à usiner (2).
